# DEMANDE DE BREVET EUROPEEN

(11) **EP 0 768 196 A1**
(43) Date de publication de la demande: **16.04.1997**
(21) Numéro de dépôt: 96402169.5
(22) Date de dépôt: 11.10.1996
(51) Int. Cl.: B60G 11/02, F16F 1/368

(54) **Dispositif d'amortissement, tel que suspension, à rigidité progressive**

(30) Priorité: 12.10.1995 FR 9511995
(71) Demandeur: S.A. THIBAULT-ESSIEUX R.T.N., F-49490 Noyant (FR)
(72) Inventeur: Thibault, Alain, 49150 Bauge (FR); Bex, Cyrille, 49400 Saumur (FR)
(74) Mandataire: Dawidowicz, Armand

(57) **Abrégé**

La présente invention concerne un dispositif d'amortissement du type comprenant un support (1) solidaire d'un châssis et sur lequel est articulé à pivotement un levier (4), équipé d'un axe (5), support d'une roue et au moins un ressort (6) en forme de U dont l'une des branches est articulée sur le support (1) tandis que l'autre branche est articulée sur le levier (4).

Ce dispositif d'amortissement est caractérisé en ce que l'axe d'articulation du levier sur le support est écarté par rapport au châssis d'une distance au moins égale au tiers de la distance entre l'axe (El) d'articulation du levier (4) sur le support (1) et l'axe (5) support de la roue ou de la glissière de telle sorte que le débattement angulaire du levier (4) sous l'action d'une force permet d'assurer une augmentation significative de la rigidité dudit dispositif d'un facteur au moins égal à deux.

Application aux remorques et aux caravanes.

## Description

La présente invention concerne un dispositif d'amortissement et plus particulièrement une suspension du type comprenant un support solidaire d'un châssis ou d'un bâti et sur lequel est articulé à pivotement un levier, tel qu'une raquette, équipé d'un axe, tel qu'une fusée, support d'une roue ou d'une glissière et au moins un ressort en forme de U ou C dont l'une des branches est articulée sur le support tandis que l'autre branche est articulée sur le levier.

L'invention s'applique plus particulièrement aux véhicules tractés du type remorques, caravanes ou similaires ou aux véhicules moteurs. L'amortissement de charges en mouvement, telles que des roues, dont on cherche à amortir la force de réaction au sol par un organe élastiquement déformable, tel qu'un ressort, est un problème bien connu en particulier dans le domaine des suspensions telles que les suspensions de véhicules tractés tels que les remorques ou les caravanes. Pour résoudre ce problème, divers dispositifs présentant une rigidité progressive ont été imaginés. Cette rigidité progressive est généralement obtenue par le déplacement des points d'appui d'une organe élastiquement déformable par rapport au support ou au levier grâce à une came, un rouleau, une bielle. Un exemple de réalisation d'une telle suspension est par exemple décrit dans le brevet FR-A-2.574.028. De tels dispositifs ne sont toutefois pas exempts d'inconvénients. En effet, les frottements occasionnés par une came ou un galet sur une lame élastiquement déformable réduisent la durée de vie de l'ensemble. En outre, le montage fastidieux et la multiplication des pièces génèrent un surcoût. Enfin, le grand nombre de pièces en mouvement réduit fortement la fiabilité de l'ensemble et nécessite une maintenance.

D'autres suspensions, telles que celle décrite dans la demande internationale WO 94/18019, présentent une rigidité dont la progression évolue dans un sens défavorable pour un chargement réduit du châssis en constituant une suspension de plus en plus souple tandis qu'une évolution significative de la rigidité dans un sens favorable n'est plus possible pour des charges élevées en raison de la conception du support. En effet, dans le cas de la suspension décrite dans ce brevet, le support enveloppe complètement le ressort. En conséquence, une dimension importante du ressort nécessite un support encombrant, ce qui n'est pas forcément compatible avec les applications envisagées. En outre, indépendamment du positionnement du support sur le châssis, le débattement du levier reste limité par le support lui-même.

Il est à noter que ce support est solidaire du châssis après montage de la suspension. Ce support a donc pour seul objet de faciliter le montage d'une suspension sur un châssis lorsque la suspension est vendue seule. Toutefois, une pièce formée d'une seule pièce avec le châssis et formant une saillie de ce dernier constitue un équivalent lorsque la suspension et le châssis sont fabriqués et montés par une même entité. De même, dans certains cas, le support peut être constitué de plusieurs éléments en raison de la conception du châssis. En conclusion, le support peut être formé d'une seule pièce avec le châssis ou rapporté sur ce dernier et constitue dans tous les cas une saillie de ce dernier.

Le but de la présente invention est donc de pallier les inconvénients précités en proposant un dispositif d'amortissement perfectionné à rigidité progressive se caractérisant par une usure extrêmement limitée de la lame du fait que celle-ci travaille moins avec des charges importantes, par une tenue de route améliorée du véhicule équipé d'un tel dispositif du fait que la suspension est très souple lorsque le chargement du véhicule est faible, et au contraire très raide lorsque le chargement est important, et par une réduction des mouvements de rotation du ressort limitant ainsi les risques de rupture de ce dernier.

Un autre but de l'invention est de proposer un dispositif conçu pour supprimer un certain nombre d'accessoires du châssis tels que la barre antiroulis.

L'invention concerne à cet effet un dispositif d'amortissement, tel que suspension, du type comprenant un support, solidaire d'un châssis ou d'un bâti, et sur lequel est articulé à pivotement un levier, tel qu'une raquette, équipé d'un axe, tel qu'une fusée, support d'une roue ou d'une glissière et au moins un ressort en forme de U ou C dont l'une des branches est articulée sur le support tandis que l'autre branche est articulée sur le levier, caractérisé en ce que l'axe d'articulation du levier sur le support est écarté par rapport au châssis d'une distance au moins égale au tiers de la distance entre l'axe d'articulation du levier sur le support et l'axe support de la roue ou de la glissière de telle sorte que le débattement angulaire du levier sous l'action d'une force permet d'assurer une augmentation significative de la rigidité dudit dispositif d'un facteur au moins égal à deux. Il est noter que cette force est généralement la force de réaction appliquée à la roue au niveau de son appui au sol.

Du fait de cette réalisation, le levier est articulé sur le support de manière telle que la distance entre le point d'articulation du levier sur le support et le projeté orthogonal d'un point dudit levier où s'exerce la force de réaction au sol (exemple : point de fixation de la fusée) sur un plan horizontal diminue lorsque la force de réaction au sol sur la roue augmente de manière à réduire le couple exercé par la roue sur le ressort. La tenue de roue est ainsi nettement améliorée.

Selon une forme de réalisation préférée de l'invention, le ressort est monté respectivement sur le levier et sur le support de telle sorte que la distance entre l'axe d'articulation du levier sur le support et l'axe passant par les points d'articulation respectifs du ressort sur le levier et sur le support augmente lorsque la force de réaction au sol exercée sur la roue augmente. Quant au levier, lorsqu'il occupe une position correspondant au chargement minimal du châssis, il est disposé sensiblement dans un plan horizontal ou au-dessus du plan horizontal passant par son axe d'articulation sur le support.

En outre, pour limiter l'usure du ressort en réduisant l'angle de rotation des extrémités dudit ressort, les points d'articulation respectifs du ressort sur le support et sur le levier sont sensiblement disposés sur un cercle de centre correspondant au point d'articulation du levier sur le support.

Enfin, pour optimiser ce dispositif, les demi-droites ayant pour origine le point d'articulation du levier sur le support et passant l'une par le point d'articulation du ressort sur le levier, l'autre par le point d'articulation du ressort sur le support forment entre elles un angle compris dans la plage [30-90°] lorsque le levier occupe une position correspondant à la position de chargement minimal du châssis. De même, la distance entre l'axe d'articulation du levier sur le support et l'axe d'articulation du ressort sur le levier est de préférence supérieure à la distance entre l'axe d'articulation du levier sur le support et l'axe de support de roue ou de glissière.

L'invention sera bien comprise à la lecture de la description suivante d'exemples de réalisation, en référence aux dessins annexés dans lesquels :
la figure 1 représente une vue en perspective d'un dispositif conforme à l'invention ;
la figure 2 représente une variante de la figure 1;

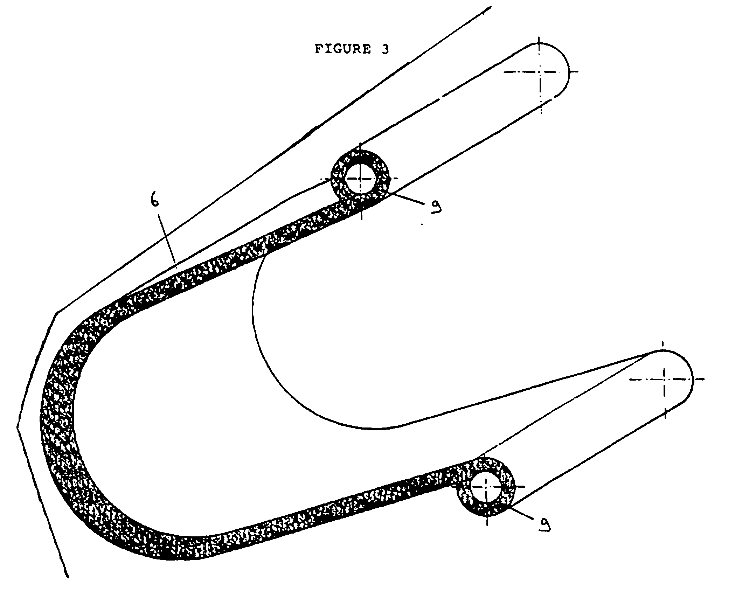

la figure 3 représente une vue en perspective d'un ressort ;
la figure 4 représente un tableau mettant notamment en évidence l'évolution du débattement, c'est-à-dire du déplacement du point D suivant une verticale en fonction de l'évolution du poids total en charge et
la figure 5 représente l'allure de la courbe débattement = f (PTC) obtenue à partir des données du tableau de la figure 4.

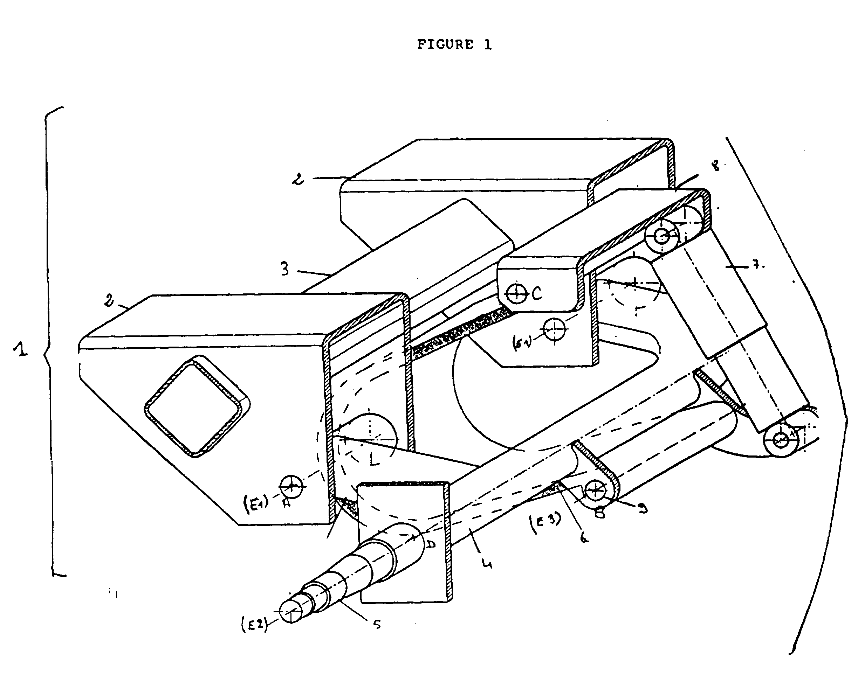

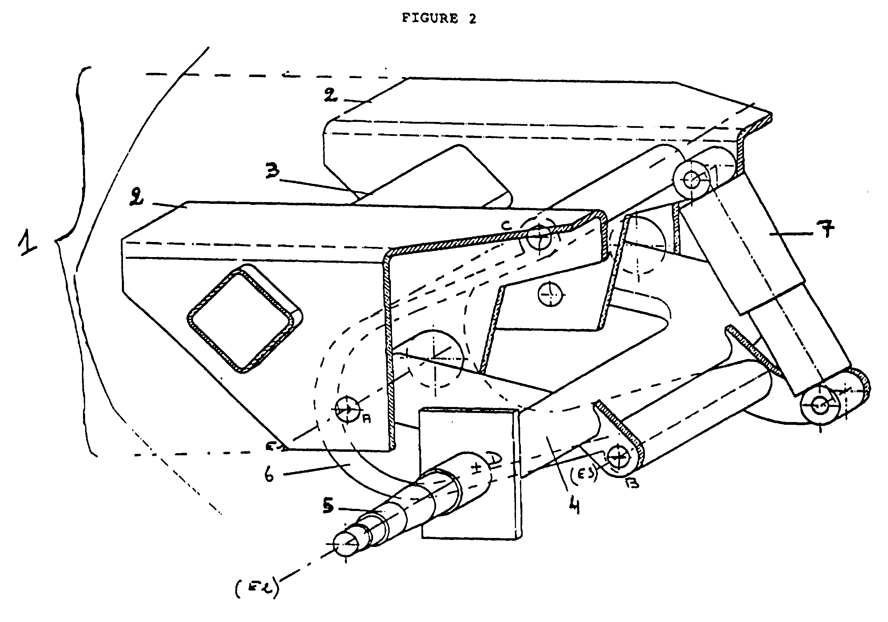

Le dispositif d'amortissement, objet de l'invention, peut constituer à titre d'exemple un suspension du type de celle représentée aux figures 1 et 2. Cette suspension comprend un support 1 solidaire d'un châssis et sur lequel est articulé à pivotement un levier 4, tel qu'une raquette, équipé d'un axe 5, tel qu'une fusée, support d'une roue et au moins un ressort 6 en forme de U ou de C dont l'une des branches est articulée sur le support 1 tandis que l'autre branche est articulée sur le levier 4. Dans l'exemple représenté à la figure 1, le support 1 solidaire du châssis est constitué d'un tronçon de poutre 3 sur lequel sont disposées deux chapes 2. Le levier 4 est constitué d'une raquette en forme d'anse dont les extrémités libres s'articulent respectivement sur chaque chape 2. Le ressort 6 est disposé dans l'espace laissé libre entre lesdites chapes 2. Le ressort est généralement un ressort en forme de U ou de C réalisé en matériau composite, ce ressort 6 incorporant à chacune de ses extrémités des inserts 9 tels que des tronçons d'arbre traversants qui permettent l'articulation du ressort 6 respectivement sur le support 1 et le levier 4 constitué par la raquette au moyen d'organes de fixation appropriés. Grâce à cette disposition du ressort par rapport au support, les dimensions du ressort n'ont aucune influence sur celles du support. En outre, le support ne gêne en rien le débattement de la raquette. On note enfin que toute butée de limitation du débattement angulaire de la raquette est supprimée.

Bien évidemment, ce dispositif peut être constitué de deux supports 1 reliés entre eux par une poutre formée d'une seule pièce avec les tronçons de poutre 3 de chaque support 1, l'ensemble constituant un essieu destiné à être fixé sous un châssis de véhicule moteur ou tracté.

La figure 2 se distingue de la figure 1 uniquement par la forme du support dans lequel une chape 8 indépendante du reste du support et sur laquelle est articulée une extrémité du ressort 6 est supprimée. Ceci démontre que le support peut être formé d'un ou plusieurs éléments en fonction de la conception du châssis auquel il est solidarisé. Dans ce cas, le ressort est directement articulé sur les chapes 2. Ces suspensions représentées dans les figures 1 et 2 constituent des solutions optimales dans lesquelles l'axe El d'articulation du levier 4 sur le support est écarté par rapport au châssis d'une distance égale par exemple à 150 mm tandis que la distance (E1)-(E2) qui correspond à la distance entre l'axe d'articulation du levier 4 sur le support 1 et l'axe de fusée 5 de la roue est égale à 120 mm de telle sorte que le débattement angulaire du levier 4 sous l'action d'une force permet d'assurer une augmentation significative de la rigidité dudit dispositif d'un facteur au moins égal à quatre. On note que dans ce cas, le rapport entre les distances précitées est égal à 1,25. Dans des applications suspension, ce rapport sera de préférence compris dans la plage [0,33-1,75]. Le levier 4 qui, à la figure 1, est représenté dans une position correspondant au chargement minimal du châssis est disposé dans cette position dans une plage angulaire comprise entre [-15° ; +30°] par rapport au plan horizontal. Dans le cas représenté, la position du levier 4, correspondant à un chargement minimal du châssis, est de -13° par rapport à l'horizontal. Les points d'articulation respectifs C, B du ressort 6 sur le support 1 et sur le levier 4 sont sensiblement disposés sur un cercle de centre A correspondant au point d'articulation du levier 4 sur le support 1. Dans ce cas, AB=AC=155 mm. L'angle formé par AC avec l'horizontale dans cette position du levier 4 est de 53° tandis que l'angle formé par DB avec l'horizontal est égal à zéro. L'angle BAC est de l'ordre de 70°.

On constate que dans cette suspension l'axe E1 d'articulation du levier 4 sur le support 1, l'axe E3 d'articulation du ressort 6 sur le levier 4 et l'axe E2 de support de roue ou de glissière sont sensiblement dans un même plan. On note également qu'un vérin 7 servant d'amortisseur relie la raquette au support.

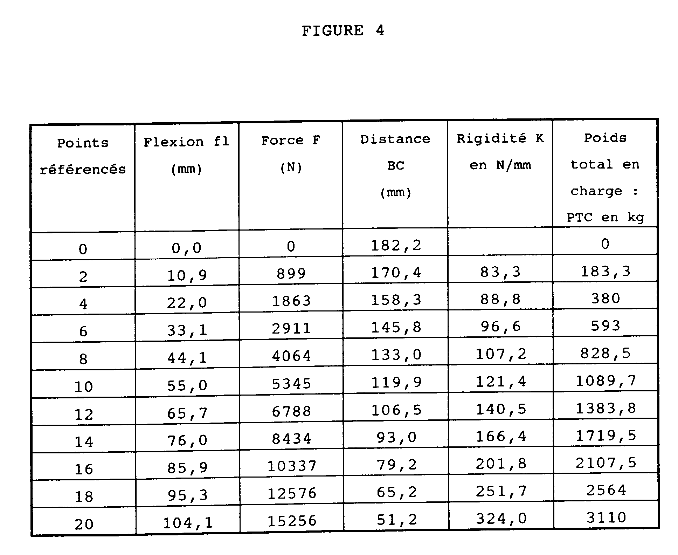

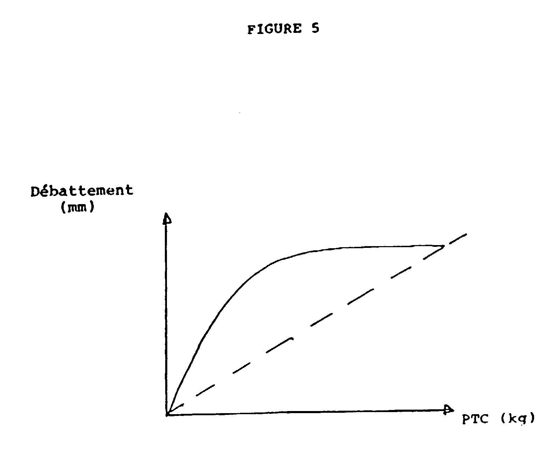

Le comportement d'une telle suspension peut être étudié grâce aux données fournies dans le tableau de la figure 4. La première colonne de ce tableau indique la référence des points étudiés. La colonne 2 exprime en mm la flexion, c'est-à-dire le déplacement du point D suivant sa verticale. La colonne 3 indique les valeurs en Newtons de la force de réaction du sol appliquée en D pour chaque point de la colonne 1, la colonne 4 indique en mm la valeur de BC pour chaque point de la colonne 1, la colonne 5 représente la valeur de la rigidité en N/mm tandis que la colonne 6 indique, exprimé en kg, le poids total en charge égal à F x 2 / g lorsque le véhicule est équipé de deux roues, g étant le symbole de l'accélération de la pesanteur. Les colonnes 2 et 5 permettent d'obtenir une courbe d'allure conforme à celle représentée à la figure 5 où le PTC est représenté en abscisses et la flexion ou débattement en ordonnées.

L'analyse de ce tableau et de cette courbe démontrent que par exemple, de 0 à 100 kg, on a un débattement (f1) de 6 mm tandis que de 3000 à 3100 kg, on a un débattement de 1,25 mm. Ceci permet de constater que la lame travaille moins avec des charges importantes, ce qui réduit notablement son usure. L'allure de la courbe, comparée à une courbe classique (tracé en pointillé) indique que la suspension est plus souple au départ qu'une suspension classique, ce qui a pour conséquence de réduire les sauts du châssis, en particulier lors du passage dans un nid de poule ou un trou ménagés sur la voie. Enfin, avec un ressort de raideur constante de l'ordre de k = 70 N/mm, on peut par exemple amortir 1,5 tonne pour un débattement de la lame de 130 mm. La lame peut donc être d'un encombrement relativement réduit.

Du fait des caractéristiques de cette suspension, on constate une meilleure tenue de roue de l'ensemble du véhicule, la suppression des sauts du châssis à vide comme en charge, l'absence de balancement et de départ en lacet en particulier dans le cas de caravanes. Cette meilleure tenue de roue inhérente à la suspension permet de supprimer par exemple la barre antiroulis fixée sous le châssis.

Bien évidemment, les valeurs numériques fournies ci-dessus ne constituent qu'un exemple de réalisation de l'invention.

## Revendications

1. Dispositif d'amortissement, tel que suspension, du type comprenant un support (1), solidaire d'un châssis ou d'un bâti, et sur lequel est articulé à pivotement un levier (4), tel qu'une raquette, équipé d'un axe (5), tel qu'une fusée, support d'une roue ou d'une glissière et au moins un ressort (6) en forme de U ou de C dont l'une des branches est articulée sur le support (1) tandis que l'autre branche est articulée sur le levier (4),
caractérisé en ce que l'axe (El) d'articulation du levier (4) sur le support (1) est écarté par rapport au châssis d'une distance au moins égale au tiers de la distance entre l'axe (El) d'articulation du levier (4) sur le support (1) et l'axe (5) support de la roue ou de la glissière de telle sorte que le débattement angulaire du levier (4) sous l'action d'une force permet d'assurer une augmentation significative de la rigidité dudit dispositif d'un facteur au moins égal à deux.

2. Dispositif d'amortissement selon la revendication 1,
caractérisé en ce que le ressort (6) est monté respectivement sur le levier et sur le support de telle sorte que la distance entre l'axe d'articulation (El) du levier (4) sur le support (1) et l'axe passant par les points d'articulation respectifs (B, C) du ressort (6) sur le levier (4) et sur le support (1) augmente lorsque la force de réaction appliquée à la roue au niveau de son appui au sol augmente.

3. Dispositif d'amortissement selon la revendication 1,
caractérisé en ce que le levier (4), lorsqu'il occupe une position correspondant au chargement minimal du châssis, est disposé sensiblement dans un plan horizontal ou au-dessus du plan horizontal passant par son axe (El) d'articulation sur le support (1).

4. Dispositif d'amortissement selon la revendication 1,
caractérisé en ce que les points d'articulation respectifs (C, B) du ressort (6) sur le support (1) et sur le levier (4) sont sensiblement disposés sur un cercle de centre (A) correspondant au point d'articulation du levier (4) sur le support (1).

5. Dispositif d'amortissement selon la revendication 1 ,
caractérisé en ce que les demi-droites ayant pour origine le point d'articulation (A) du levier (4) sur le support et passant l'une par le point d'articulation (B) du ressort (6) sur le levier (4), l'autre par le point d'articulation (C) du ressort (6) sur le support (1) forment entre elles un angle compris dans la plage [30-90°] lorsque le levier (4) occupe une position correspondant à la position de chargement minimal du châssis.

6. Dispositif d'amortissement selon la revendication 1,
caractérisé en ce que la distance entre l'axe (El) d'articulation du levier (4) sur le support (1) et l'axe (E3) d'articulation du ressort (6) sur le levier (4) est supérieure à la distance entre l'axe (El) d'articulation du levier (4) sur le support (1) et l'axe (E2) de support de roue ou de glissière.

7. Dispositif d'amortissement selon la revendication 1,
caractérisé en ce que l'axe (El) d'articulation du levier (4) sur le support (1), l'axe (E3) d'articulation du ressort (6) sur le levier (4) et l'axe (E2) de support de roue ou de glissière sont sensiblement dans un même plan.

8. Dispositif d'amortissement selon la revendication 1,
caractérisé en ce qu'il constitue une suspension dont, d'une part, le support (1) solidaire du châssis est constitué d'un tronçon de poutre (3) sur lequel sont disposées deux chapes (2), et dont, d'autre part, le levier (4) est constitué d'une raquette en forme d'anse dont les extrémités libres s'articulent sur chaque chape (2), le ressort (6) étant disposé dans l'espace laissé libre entre lesdites chapes(2)

9. Dispositif d'amortissement selon l'une des revendications 1, 2 ou 8,
caractérisé en ce que le ressort (6) est un ressort en forme de U ou de C réalisé en matériau composite, ce ressort (6) incorporant à chacune de ses extrémités des inserts (9), tels que des tronçons d'arbre traversants, qui permettent l'articulation du ressort (6) respectivement sur le support (1) et le levier (4), constitué par une raquette, au moyen d'organes de fixation appropriés.

10. Dispositif d'amortissement selon la revendication 8,
caractérisé en ce qu'il est constitué de deux supports (1) reliés entre eux par une poutre formée d'une seule pièce avec les tronçons de poutre (3) de chaque support (1), l'ensemble constituant un essieu destiné à être fixé sous un châssis de véhicule moteur ou tracté.
